# EUROPEAN PATENT APPLICATION

(11) **EP 0 854 420 A2**
(43) Date of publication of application: **22.07.1998**
(21) Application number: 97119950.0
(22) Date of filing: 14.11.1997
(51) Int. Cl.: G06F 9/44

(54) **Access key objects**

(30) Priority: 16.01.1997 EP 97100556
(71) Applicant: International Business Machines Corporation, Armonk, N.Y. 10504 (US)
(72) Inventor: Carey, James, Rochester, MN 55901 (US); Barlson, Brent, Rochester, MN 55902 (US); Graser, Timothy, Rochester, MN 55901 (US)
(74) Representative: Teufel, Fritz, Dipl.-Phys.

(57) **Abstract**

The invention relates to a framework to be used for developing a software system e.g. for a warehouse application. This framework includes a number of object oriented classes which may be processed by a computer system. The number of object oriented classes includes an access key class and an access key component class, wherein the access key class relates to an access key for accessing an item e.g. in a map and wherein the access key component class relates to specific components of the access key. Each of the specific components has a number of entries, wherein each access key object includes exactly one entry out of the number of entries of each of the specific components in a given sequence.

## Description

### Field of the Invention:

The invention relates to a framework to be used for developing a software system e.g. for a business application, said framework including a number of object oriented classes which may be processed by a computer system.

### Description of the Prior Art:

More and more, the software industry uses object oriented technology to develop software for e.g. a business application. For that purpose, object oriented classes are created so that instatiated objects of these classes are able to process the business application on a computer system. Thereby, the instantiated objects are the implementations of the classes and include programming code.

Object oriented technology has the advantage that a software developer is able to work on a specific class or object without detailed knowledge of the other classes or objects.

For that purpose, a class should be designed such that each instantiated object of the class is a mirror of an object in the real world. E.g., a business partner class should be designed such that each of its instantiated business partner objects relates to one real business partner and that all data concerning this real business partner should be accessible by using this business partner object.

For some time, the software industry has tried to develop standardized classes which may be used again and again for the solution of a specific problem. These classes are then taken together in a so-called framework and are used to develop software systems, e.g. for business applications. This approach has the advantage that the reusability of the developed programming code is increased.

Such frameworks may have for example two levels. In a first level, a framework provider develops general classes which may be adapted to be used in any application. Then, in a second level, a solution provider adapts this framework to a specific application, e.g. to a business application or a warehouse application and so on. This solution is finally used by e.g an insurance company or a retail company to run its business.

In particular for warehouse applications, the framework has to support the possiblity to represent and access different kinds of items in a very flexible manner. For example, if a vehicle manufacturing company sells different kinds of vehicles in different countries, then the framework has to provide the possibility that e.g. the available number of a specific kind of vehicle in a specific country may be accessed easily. Furthermore, the framework has to provide the possibility that such a map of items may be changed at any time, in particular, that further items, e.g. the colour of the vehicle, may be added later.

### Object of the Invention:

It is an object of the invention to provide an object oriented technology which fulfils the above requirements.

### Summary of the Invention:

The invention solves this object with an access key class and an access key component class, said access key component class isolating said access key class from specific components.

The invention provides a possibility to access non-uniform items in a uniform manner. This is achieved by the introduction of the access key component class. This access key component class isolates the access key class from the specific components so that the access key class remains generic and does not have to be restricted to each of the specific components. This means in other words that the access key class can treat the non-uniform items generically.

In a first embodiement of the invention, said access key component class is the base class for a number of access key component classes for a respective component, each of said access key component classes for a respective component having one of said specific components.

This embodiement provides all necessary features for realizing the isolation of the access key class from the specific components.

In a second embodiement of the invention, said access key component class is the base class for an access key component class for specific components which has a component class, said component class being the base class for said specific components.

This embodiement has the advantage that the access key component class for specific components is provided. This class is a generalization of the component class with the consequence that only one access key component class is necessary. The introduction of the access key component class for specific components therefore improves the flexibility of the framework without the need for the user to create new classes.

For both embodiements it is advantageous that said access key class relates to an access key for accessing an item e.g. in a map, that said access key component class relates to said specific components with each of said specific components having a number of entries, and that each access key object includes exactly one entry out of said number of entries of each of said specific components in a given sequence.

According to these features of the invention, the access key includes a number of components and each of these components itself includes a number of entries. An access key object is built up out of exactly one entry out of each component and these entries are ordered in a given sequence. Therefore, if the access key is used to access items in a map, each item in this map has a dedicated address which depends on the sequence of the components of the access key.

For example, if in the above mentioned vehicle manufacturing company someone wants to know how many red cars are available in Japan, the access key would for example look like "car, Japan, red". With this access key it would be possible to access the relevant item, i.e. the number of red cars available in Japan from the map.

The advantage of this access key is its flexibility. It is no problem to change one of the components or to add further components. In particular, the addition of further components does not influence the existing access key or its components.

### Brief Description of the Drawings:

- Figure 1: shows a class diagram of a first embodiement of the invention;
- figure 2: shows a class diagram of a second embodiement of the invention;
- figure 3: shows an access key with components and entries of the components according to the invention;
- figure 4: shows an example of specific access keys according to the invention; and
- figure 5: shows a given access key according to the invention.

### Detailed Description:

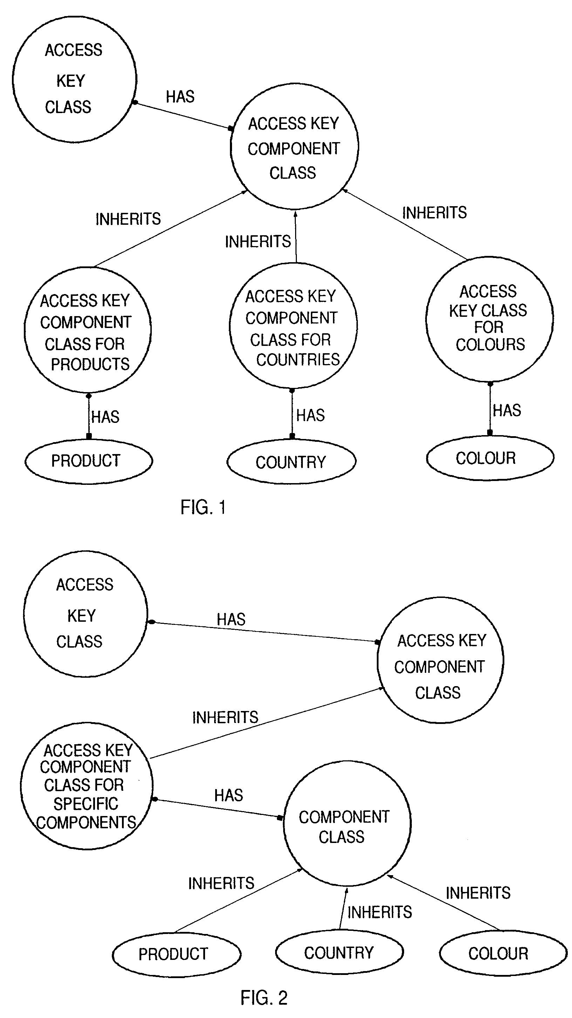

Figure 1 shows an access key class which has or holds on an access key component class. Three access key component classes for respective components inherit from this access key component class. These are an access key component class for products, an access key component class for countries and an access key component class for colours. Each of these last mentioned three classes has or holds on one respective further class, i.e. a product class, a country class and a colour class.

Of course, it is possible that more than three access key component classes are provided. However, at least one access key component class is necessary. The same is valid for the number of the above mentioned further classes.

The access key component class is an abstract class and the access key component classes for respective components inherit from the access key component class.

With the help of these classes it is possible for an application to build a specific access key which may be adapted to the specific requirements of the application.

Figure 2 shows an access key class which has or holds on to an access key component class. An access key component class for specific components inherits from this access key component class. The last mentioned access key component class for specific components has or holds on to a component class from which three further classes inherit, i.e. a product class, a country class and a colour class. This relationship allows the access key component class for specific components to be used for any of the classes derived from component class.

Of course, it is possible that more than three further classes are provided. However, at least one further class is necessary.

The access key component class is an abstract class.

With the help of these classes it is possible for an application to build a specific access key which may be adapted to the specific requirements of the application.

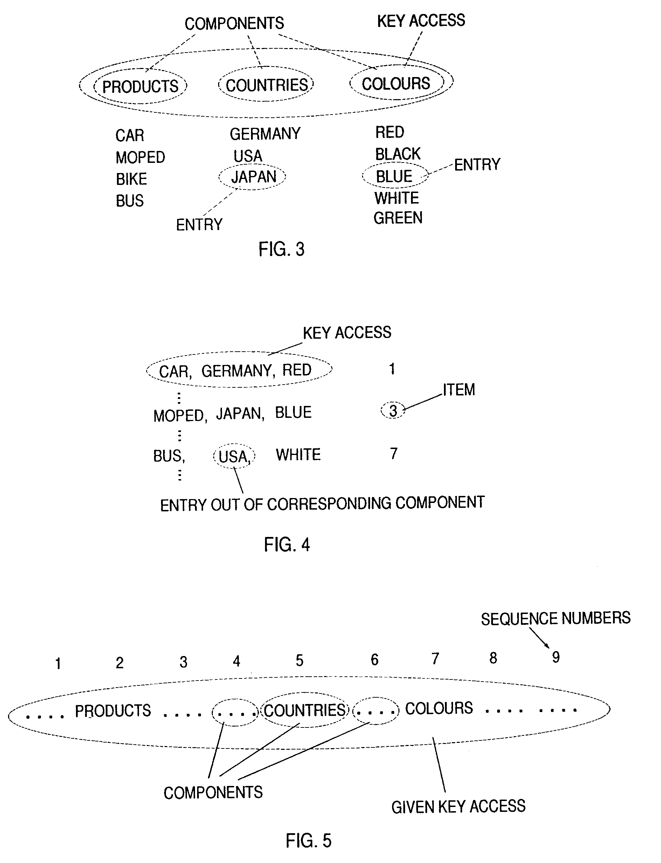

Figure 3 shows an access key. The shown access key is an example which is directed to and may therefore be used by e.g. a vehicle manufacturing company.

The shown access key includes three components. Of course, it is possible that the access key includes even more components; however, at least one component is necessary to built up an access key. The components are "products", "countries" and "colours". The component "products" relates to the products manufactured by the vehicle manufacturing company. The component "countries" relates to the countries where these products are manufactured. And the component "colours" relates to the colours of the manufactured products.

Each of these components consists of a number of entries. At least one entry is necessary for a component. The number of entries of different components may be different. According to figure 3, the component "products" has the entries "car", "moped", "bike" and "bus". This means that the products of the vehicle manufacturing company include cars, mopeds, bikes and buses. The entries of the component "countries" are "Germany", "USA" and "Japan". This means that the vehicle manufacturing company manufactures its products in Germany, the United States and Japan. And the component "colours" includes the entries "red", "black", "blue", "white" and "green". This means that the products are manufactured in red, black, blue, white and green colours.

Figure 4 shows an example of specific access keys and their relationship to specific items in a map. This specific access key may only include exactly one entry of the entries of each of the components. For example, with regard to the component "countries" with the entries "Germany", "USA" and "Japan" only one of these entries may be included in each of the specific access keys of figure 4, i.e. "Japan" in the second access key. Furthermore, the sequence of the components is fixed. This means that the sequence of the entries of all of the access keys is always the same. This sequence of the entries may be selected by the application or by the user. In the example of figure 4, the sequence of the entries is such that the first entry belongs to the component "products", the second entry belongs to the component "countries" and the third entry belongs to the component "colours".

The first access key shown in figure 4 is "car, Germany, red". This access key is an address relating to a map which includes all products manufactured by the vehicle manufacturing company in all countries and in all colours. The access key points to exactly one item in this map which says that the number of red cars manufactured in Germany is "1". The second access key in figure 4 reads "moped, Japan, blue". The access key points to exactly one item and the corresponding number of such blue mopeds manufactured in Japan is "3". And so on.

If a further component has to be introduced, this may be done by adding this further component at the end of the given sequence. The existing map or the other existing access keys do not have to be changed at all.

For example, if the number of seats of the relevant vehicle products is important and has to be introduced as a component this may be done by adding a further component "number of seats" at the end of the sequence of components shown in figure 2. This further component may for example include the entries "60", "100" and so on. A specific access key including this new component would for example read "bus, USA, white, 100 seats". This specific access key would point to an address in the map where the number of white buses with 100 seats being manufactured in the United States would be accessible as an item.

It is possible that one of the entries of one of the components is not present for an item of the map. In this case, the entry is filled with the contents "not specified".

This term might also be a default value for entries of new components. For example if existing map, the addition of a new component could be handled by adding "not specified" for the new component in the existing map entries.

Figure 5 shows a given access key which may be provided by the framework provider or the solution provider. This given access key includes a greater number of possible components for e.g. a vehicle manufacturing company.

In the example of figure 5, the given access key includes nine different components. Of course, a given access key may also provide more than nine components. Among others, the nine components in figure 5 are "products", "countries" and "colours".

These nine components are ordered in a fixed sequence. For the purpose of clarity, the sequence is shown by sequence numbers, However, such sequence numbers do not have to exist in an actual computer system. In figure 5, the components "products", "countries" and "colours" have the sequence numbers 2, 5 and 7. The other positions of the given access key are filled with other components which are not characterized in further detail.

A user may use this given access key for his application. He only has to adapt it to his specific application. Such adaption may be done by filling the entries of the suitable components with the required values and filling the entries of the other non-suitable components with the contents "not specified".

## Claims

1. Framework to be used for developing a software system e.g. for a warehouse application, said framework including a number of object oriented classes which may be processed by a computer system, wherein said number of object oriented classes includes an access key class and an access key component class, said access key component class isolating said access key class from specific components.

2. Framework according to claim 1 wherein said access key class has said access key component class.

3. Framework according to claim 2 wherein said access key component class is the base class for a number of access key component classes for a respective component, each of said access key component classes for a respective component having one of said specific components.

4. Framework according to claim 2 wherein said access key component class is the base class for an access key component class for specific components which has a component class, said component class being the base class for said specific components.

5. Framework according to claim 1 wherein said access key class relates to an access key for accessing an item e.g. in a map, wherein said access key component class relates to said specific components with each of said specific components having a number of entries, and wherein each access key object includes exactly one entry out of said number of entries of each of said specific components in a given sequence.

6. Framework according to claim 5 wherein said given sequence may be assigned to said access key object e.g. by said warehouse application.

7. Framework according to claim 1 wherein said access key component class is an abstract class.

8. Framework according to claim 3 wherein said access key component classes for respective components are derived classes of said access key component class.

9. Framework according to claim 5 wherein said access key object may be used to address said item e.g. in said map.

10. Framework according to claim 5 wherein any number of entries of said access key object may be filled with the contents "not specified" to indicate absence of specific information.
